# EUROPÄISCHE PATENTSCHRIFT

(11) **EP 2 730 157 B1**
(45) Veröffentlichungstag und Bekanntmachung des Hinweises auf die Patenterteilung: **01.06.2016**
(21) Anmeldenummer: 13005301.0
(22) Anmeldetag: 11.11.2013
(51) Int. Cl.: A01D 69/00, A01D 69/03, A01D 33/12, A01B 71/00, F16H 61/4078

(54) **Hydraulische Steueranordnung an Arbeitsorganen einer landwirtschaftlichen Maschine**
Hydraulic control arrangement on the working equipment of an agricultural machine
Agencement de commande hydraulique sur des organes de travail d'une machine agricole

(30) Priorität: 12.11.2012 DE 102012022018
(43) Veröffentlichungstag der Anmeldung: 14.05.2014
(73) Patentinhaber: Grimme Landmaschinenfabrik GmbH & Co. KG, 49401 Damme (DE); Bucher Hydraulics GmbH, 79771 Klettgau (DE)
(72) Erfinder: Christian Biemann, D-49597 Rieste (DE); Ludger Pille, D-49439 Steinfeld (DE); Wolfgang Todt, D-79771 Klettgau (DE); Josef Bercher, D-79802 Dettighofen (DE)
(74) Vertreter: Pott, Ulrich

(56) Entgegenhaltungen:
- DE-A1- 19 753 915
- DE-A1-102005 045 242
- DE-A1-102006 053 897
- DE-C2- 3 823 892
- US-A- 4 163 524
- US-A1- 2011 036 651

## Beschreibung

Die Erfindung betrifft eine hydraulische Steueranordnung an Arbeitsorganen einer landwirtschaftlichen Maschine gemäß dem Oberbegriff des Anspruchs 1.

Für die Betätigung von Arbeitsorganen an landwirtschaftlichen Maschinen, beispielsweise Ladewagen, Erntemaschinen o. dgl. angehängte Fahrzeuge, wird das Antriebssystem eines als Schlepper vorgesehenen Zugfahrzeuges genutzt. Dabei wird die gezogene Maschine so gekoppelt, dass eine hydraulische Leistung vom Schlepper abgefordert werden kann und an diesem ein die entsprechende Leistung bereitstellendes Hydraulikaggregat vorzuhalten ist. Dessen volle Hydraulikleistung wird jedoch nicht permanent abgerufen, sondern entsprechend den zu bedienenden Arbeitsorganen schwankt der Leistungsbedarf bedarfsgerecht. Bei der Optimierung dieser Verbindungsmöglichkeiten mit "Anhängegeräten" werden von den Herstellern an den Kundenbedarf anpassbare Pumpen in den Schlepper eingebaut. Dies führt zu dem Nachteil, dass mit großen Pumpen auch entsprechende Verlustleistungen in Kauf genommen werden.

Von den Schlepperherstellern sind Aggregate mit Förderleistungen bis zu 200 l/min denkbar, so dass entsprechend groß dimensionierte Verbindungen zwischen Schlepper und Arbeitsorganen notwendig sind. Dabei treten bei Verwendung von Standardkupplungen bereits größere Druckverluste dann auf, wenn die Volumenströme größer als 40 l/min werden. Daraus resultiert, dass eine eingestellte Regeldruckdifferenz der Schlepperpumpe oft nicht ausreicht, um die von den Arbeitsorganen geforderte Menge zu erzeugen. Hinzu kommt, dass verschiedene parallel geschaltete Arbeitsorgane als Verbraucher des Hydrauliksystems in Folge unterschiedlichen Druckniveaus große Verlustleistungen erzeugen.

Als eine Möglichkeit zur Minimierung der Verlustleistungen ist deshalb vorgesehen, ausreichend hydraulische Leistung dadurch bereitzustellen, dass eine zusätzliche separate Hydraulikanlage im Schlepper-Anhänger-System bereitgestellt wird. Dazu ist ein großer konstruktiver und materieller Aufwand erforderlich, da zusätzlich zu dem am Schlepper vorhandenen Hydrauliksystem für die jeweiligen Arbeitsorgane bzw. -geräte der angekoppelten Maschine ein zweites System mit nahezu identischen Bauteilen erforderlich ist. Bekannt sind dabei zusätzliche Hydrauliksysteme an der Maschine, bei denen eine oder mehrere Pumpen mit entsprechenden Verteilergetrieben genutzt werden. Diese Zusatz-Systeme werden von der Zapfwelle des Schleppers angetrieben, erfordern einen separaten Hydrauliktank mit Filter und Kühlsystem sowie eine eigene Ventiltechnik zur Steuerung der Arbeitsorgane der Maschine.

Bei einer landwirtschaftlichen Gerätekombination gemäß DE 10 2005 045 242 A1 wird ein System mit zwei Hydraulikanlagen beschrieben, so dass hier die in zweifacher Ausführung zu installierenden hydraulischen Teile wie Filter, Kühler und Tank jeweils für ein Gebläse einsetzbar werden. Dabei kann bei dieser Gerätekombination die hydraulische Leistung nur wahlweise vom Schlepper oder von der Maschine abgenommen werden. Eine vergleichbare Lösung mit zwei Pumpensystemen ist gemäß US 4,163,524 A offenbart

Eine Druckmittelversorgung für Nutzfahrzeuge, insbesondere Omnibusse, ist in DE 197 53 915 A1 vorgeschlagen. Dabei wird ein elektrisch schaltbares 3-Wege-Schaltventil eingesetzt, um den von zwei Pumpen erzeugten Volumenstrom auf zwei Verbraucher lediglich umzuschalten. Mit diesem an sich bekannten 3-Wege-Schaltventil können dann Nebenverbraucher wie Klimaanlage, Kühlerlüfter und Lichtmaschine angesteuert werden.

In DE 10 2008 038 793 A1 wird ein hydraulisches Zweikreissystem vorgeschlagen, das ebenfalls mit zumindest zwei Verstellpumpen versehen ist. Ein ähnliches System zeigt DE 38 23 892 C2, bei dem zwei Pumpen in einer Hydraulikanlage für ein konstantes Fördervolumen sorgen. Auch in DE 10 2006 053 897 A1 ist ein hydraulisches Zweikreissystem gezeigt, mit dem eine differenzdruckgesteuerte Umverteilung von Volumenströmen zwischen zwei hydraulischen Pumpenkreisläufen realisierbar ist.

Die Erfindung befasst sich mit dem Problem, eine insbesondere an gezogenen landwirtschaftlichen Maschinen einsetzbare hydraulische Steueranordnung für Arbeitsorgane zu schaffen, die mit vergleichsweise geringem technischem Aufwand eine schnelle Leistungsanpassung und -bereitstellung an den jeweils aktiven Arbeitsorganen ermöglicht, dabei das System mit wenigen Hydraulikkomponenten betreibbar ist und sowohl der hydraulisch kuppelbare Abtrieb des Zugfahrzeuges als auch dessen Zapfwelle für eine optimale Steuerung der Arbeitsorgane einsetzbar sind.

Die Erfindung löst diese Aufgabe durch eine hydraulische Steueranordnung mit den Merkmalen des kennzeichnenden Teils des Anspruchs 1. Weitere vorteilhafte Ausgestaltungen der Erfindung ergeben sich aus den Ansprüchen 2 bis 15.

Die hydraulische Steuerung für die Arbeitsorgane einer insbesondere gezogenen landwirtschaftlichen Maschine zeichnet sich erfindungsgemäß dadurch aus, dass die zumindest zwei den jeweiligen Arbeitsorganen vorgelagerten Hydraulikstrukturen mittels zumindest einer zusätzlichen hydraulischen Direkt-Verbindung eine aus gekoppelten Hydrauliksystemen bestehende Versorgungseinheit definieren. Damit werden an sich bekannte "einzelne" Systembausteine zu einer effizient einsetzbaren Regeleinheit für die Leistungsparameter von Arbeitsorganen an angehangenen Maschinen verbunden.

Das System sieht vor, dass auch mit einem nur einen der beiden gekoppelten Hydrauliksysteme eine "einzige" Versorgungseinheit für sämtliche Arbeitsorgane wirksam werden kann. Insbesondere wird mit der Versorgungseinheit erreicht, dass die hydraulische und die mechanische Schnittstelle des Zugfahrzeuges gleichzeitig bzw. phasenweise gemeinsam nutzbar sind und dabei die jeweiligen Komponenten der Versorgungseinheit optimal wirksam werden.

Auf Grundlage dieses überraschend einfachen Regelungs-Ansatzes wird ein Steuerungskonzept realisiert, bei dem ausgehend von nur einem Arbeitsvolumenstrom des Zugfahrzeuges jeweilige Differenzmengen und/oder -drücke zwischen den beiden ein jeweiliges Pumpensystem bildenden Hydraulikstrukturen erfassbar sind. Diese erfassten Parameter werden intern in der Versorgungseinheit verglichen. Danach ist eine bedarfsgerechte Umverteilung von Fördervolumen zwischen den Arbeitsorganen möglich. Dazu wird eine automatische Verarbeitung von Druckparametern im System so eingeleitet, dass an sich bekannte Regelinformationen nutzbar sind. Mittels dieser Anwendung der Versorgungseinheit können sowohl jeweils optimale Bedienfunktionen an den Arbeitsorganen ausgelöst als auch gleichzeitig die hydraulischen Energieverluste innerhalb dieses "integralen" Systems reduziert werden.

Die aus an sich bekannten Einzelteilen der Hydrauliktechnik aufgebaute Versorgungseinheit weist damit insgesamt eine integrierte Leistungsanpassung auf, da zwischen den beiden Pumpensystemen ein regelbarer Ausgleichsförderstrom zu den Arbeitsorganen hin wirksam ist. Dabei ist eine "automatische" Anpassung an die jeweiligen Funktionslagen für eine Vielzahl von Arbeitsorganen möglich. Die bisher im Stand der Technik sowohl im Bereich des direkten Hydraulikanschlusses als auch der "indirekten" Zapfwelle des Zugfahrzeuges jeweils einzeln - mit jeweiligen begrenzten Leistungsparametern - genutzten Pumpen-Strukturen sind nunmehr als eine Einheit steuerbar.

Damit können vorteilhaft die hydraulischen Verluste minimiert werden, da eine als Fehlbetrag an einem der Arbeitsorgane erfasste Leistungsdifferenz über die Versorgungseinheit aus dem zugeordneten zweiten System abgerufen werden kann.

Dieses Steuerungskonzept basiert auf einem überraschend einfachen Verbindungsaufbau, wobei die mit dem hydraulischen Antrieb des Zugfahrzeuges gekoppelte Versorgungseinheit erfindungsgemäß - ausgehend von ihrer an sich bekannten Druckzuleitung - Austauschverbinder aufweist. Bereits mit diesem einen, in hydraulischer Grundausführung als "Zweigleitung" eine Zu- und eine Abförderleitung enthaltenden Austauschverbinder wird erreicht, dass zwischen einem erfindungsgemäß als primäres Pumpensystem definierten ersten Teilbereich (im Bereich der Hydraulik des Zugfahrzeuges) und einem erfindungsgemäß als sekundäres Pumpensystem definierten zweiten Teilbereich (im Bereich der Zapfwelle) eine für sämtliche der an diesen beiden Systemen üblicherweise vorgesehenen Arbeitsorgane nutzbare Steuer- und Ausgleichsverbindung wirksam ist.

Ausgehend von diesem die beiden Zweigleitungen enthaltenden Austauscher-Konzept sind erfindungsgemäß zusätzlich noch jeweilige an sich bekannte hydraulische Antriebs- und Rückführleitungen im Bereich zwischen Zugfahrzeug und der Versorgungseinheit vorgesehen.

Die Versorgungseinheit ist ihrerseits erfindungsgemäß in jeweiligen ausgangsseitigen Bereichen mit den an sich bekannten Arbeitsorganen, beispielsweise Hydraulikzylinder o. dgl. Verbraucher, verbunden. Der dabei in das System integrierte und insbesondere von der Druckzuleitung des Zugfahrzeuges abgezweigte Austauschverbinder ist so konzipiert, dass dieser einen Teilbereich einer hydraulischen Rückkopplung bildet. Dabei wird mit den an sich bekannten zusätzlichen Rückführleitungen erreicht, dass das mit dem Hydraulikkreislauf des Zugfahrzeuges zusammenwirkende primäre Pumpensystem und das mit der Zapfwelle des Zugfahrzeuges zusammenwirkende sekundäre Pumpensystem jeweils im Bereich der Versorgungseinheit einen offenen bzw. einen geschlossenen Kreislauf definieren.

Diese hydraulische Anlage mit neuartig kombiniertem primärem und sekundärem Pumpensystem ist darauf gerichtet, dass die beiden mit weiteren Baugruppen optimierten Systeme zumindest phasenweise gemeinsam zur Aktivierung von ansteuerbaren Arbeitsorganen - auch in beiden Kreisläufen - einsetzbar sind und damit in einer komplexen Anbaumaschine die angesprochenen Leistungsreserven "umverteilt" bzw. "ausgeglichen" werden.

Ausgehend vom Stand der Technik zu hydraulischen Steuersystemen ist vorgesehen, dass die beiden über die erfindungsgemäße Versorgungseinheit kommunizierenden Pumpensysteme mit zumindest einem an die Schlepper-Hydraulik zurückgeführten, an sich bekannten Lastdruckmelder zusammenwirken. Damit wird erreicht, dass mittels des vom Lastdruckmelder aufgenommenen Drucksignals jeweilige Belastungssituationen im System erkannt werden. Danach kann vorteilhaft eine neuartige Umverteilung eines Volumenstromes vom primären zum sekundären Pumpensystem erfolgen, so dass mittels der erfindungsgemäßen Versorgungseinheit an den jeweils gesteuert aktivierten Arbeitsorganen Leistungsreserven nutzbar sind. Denkbar ist auch, Leistungsreserven dadurch zu erschließen, dass ein Volumenstrom aus dem sekundären in das primäre Pumpensystem überführt wird.

Für den Einsatz des Systems ergeben sich wesentliche konstruktive Vorteile im Vergleich mit den zum Stand der Technik notwendigen Baugruppen. Insbesondere kann nun das im primären und sekundären Pumpensystem wirkende Hydrauliköl über eine gemeinsame Rückführung gefördert werden, derart, dass nur noch ein gemeinsamer Tank - im Bereich des Zugfahrzeuges - erforderlich ist.

Der optimale Einsatz der mit dem Austauschverbinder versehenen Versorgungseinheit führt dazu, dass im Bereich des sekundären Pumpensystems eine einen Ölaustausch bewirkende Querspülung vorgesehen werden kann und damit mit geringem Aufwand ein Ölaustausch mit dem Aggregat des Zugfahrzeuges zu einer permanenten "Fluidkühlung" nutzbar ist. Dabei erfolgt eine Verteilung über den Austauschverbinder und die Rückführung in den einzigen Tank.

Die Ausgestaltung der Versorgungseinheit ist darauf gerichtet, dass das sekundäre Pumpensystem als ein im Wesentlichen geschlossener Kreislauf ausgebildet wird. Für dessen optimalen Einsatz ist vorgesehen, dass bei einer denkbaren Entkopplung der Verbindung zum gemeinsamen Tank in diesem Bereich des sekundären Pumpensystems ein zusätzlicher Kurzschlusskreislauf wirksam werden kann und damit ungewollte Beschädigungen des Pumpensystems bzw. der Versorgungseinheit vermieden werden.

Für einen optimalen Einsatz der Versorgungseinheit ist diese im Bereich der Steuerbauteile so ausgeführt, dass zumindest der Verbraucherdruck des sekundären Pumpensystems mittels einer Regelung erfasst wird. Diese Regelung ist mit einer neuartigen Zwei-Pumpen-Druckwaage als Lastdruckmelder versehen. Diese spezifische Ausführung der Druckwaage sieht vor, dass damit das Zusammenwirken einer Pumpe des primären Pumpensystems und einer Pumpe des sekundären Pumpensystems erfassbar und regelbar wird.

Eine vorteilhafte Ausführung des Systems sieht vor, dass das sekundäre Pumpensystem im Bereich der Versorgungseinheit mit integrierter Prioritätsfunktion wirksam ist. Damit wird erreicht, dass der Volumenstrom des sekundären Pumpensystems zuerst verändert werden kann und mittels der sekundären Pumpe eine priorisierte Nachförderung zu den hydraulischen Verbrauchern erfolgt.

Die Versorgungseinheit ist so aufgebaut, dass das primäre und das sekundäre Pumpensystem jeweils mit unterschiedlichen Druckbereichen betreibbar sind.

Ausgehend vom vorbeschriebenen Basiskonzept der Versorgungseinheit mit dem primären und dem sekundären Pumpensystem ist auch eine weitgehend beliebige Systemerweiterung, entsprechend den Anforderungen der angehängten Maschine, denkbar. Dabei ist insbesondere vorgesehen, dass das primäre Pumpensystem mit mehreren sekundären Systemen verbunden wird. Diese Erweiterung der gekoppelten Hydrauliksysteme erfolgt vorteilhaft derart, dass eine Anbindung der sekundären Systeme im Bereich des Austauschverbinders erfolgt. Die jeweils angeschlossenen sekundären Pumpensysteme können dabei jeweils mit einer separaten Pumpe versehen sein.

Weitere Einzelheiten und vorteilhafte Ausgestaltungen der Erfindung ergeben sich aus der nachfolgenden Beschreibung und der Zeichnung, in der die Arbeitsorgane einer landwirtschaftlichen Maschine mit der hydraulischen Steueranordnung schematisch dargestellt sind. In der Zeichnung zeigen:
- Fig. 1: ein Wirkschaltbild mit einer landwirtschaftlichen Maschine und jeweiligen an der Hydraulikkupplung bzw. der Zapfwelle angeordneten Arbeitsorganen mit einer Steuerhydraulik gemäß dem Stand der Technik,
- Fig. 2: eine Darstellung ähnlich Fig. 1 mit der erfindungsgemäßen Kopplung zweier Hydrauliksysteme zu einer Versorgungseinheit für mehrere Arbeitsorgane,
- Fig. 3: eine Darstellung ähnlich Fig. 2 mit weiteren Steuerverbindungen im Bereich der Versorgungseinheit,
- Fig. 4: eine Prinzipdarstellung von Erweiterungsmöglichkeiten zur Bildung einer im Bereich von Sekundärpumpensystemen mehrgliedrigen Versorgungseinheit, und
- Fig. 5: einen Schaltplan des Gesamtsystems mit dem Primärpumpensystem und jeweiligen zu einem Sekundärpumpensystem verlaufenden Austauschverbindern.

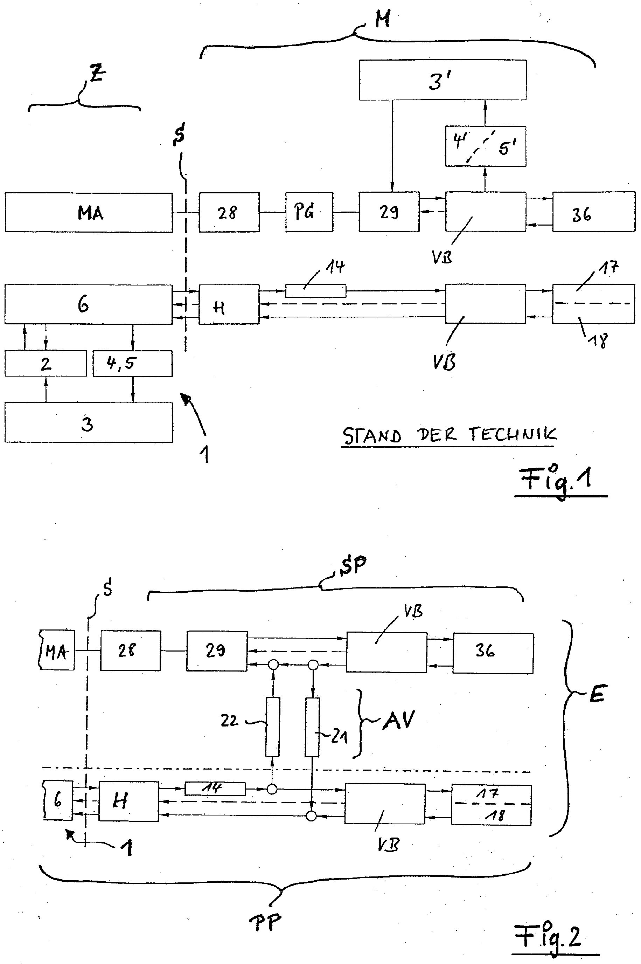

In Fig. 1 ist in einer den Stand der Technik zeigenden Prinzipdarstellung das Antriebskonzept zwischen einem als Schlepper vorgesehenen Zugfahrzeug Z und einer zugeordneten hydraulischen Steueranordnung für Arbeitsorgane einer landwirtschaftlichen Maschine M dargestellt. Dabei ist mit einer Strichlinie S die Schnittstelle zwischen dem Zugfahrzeug Z und der gekoppelten landwirtschaftlichen Maschine M angedeutet. Im Bereich des Zugfahrzeuges Z ist eine Hydraulikeinheit 1 des Zugfahrzeuges Z mit einer Zugfahrzeugpumpe 2 versehen, die aus einem Ölbehälter 3 versorgt wird, in dem das Hydrauliköl über ein Filtersystem 4 und einen Kühler 5 einleitbar ist. In diesem Bereich kann ein internes Hydrauliksystem 6 vorgesehen sein, mit dem herstellerabhängig auch jeweilige Lenk- und/oder Federsysteme zusammenwirken können.

Über eine hydraulische Schnittstelle H ist das Zugfahrzeug Z mit einem Druckfilter 14 verbunden, dem ein Ventilblock VB mit entsprechenden rotatorischen und/oder translatorischen Verbrauchern 17, 18 nachgeordnet ist. Daraus ergibt sich, dass diese hydraulischen Verbraucher in ihrer Funktion grundlegend von der Leistungsfähigkeit der Zugfahrzeugpumpe 2 abhängig sind.

Zur Erschließung von Anschlussmöglichkeiten weiterer Verbraucher bei Maschinenkonfigurationen im Stand der Technik ist deshalb vorgesehen, dass ein mechanischer Abtrieb MA des Zugfahrzeuges Z mittels einer mechanischen Schnittstelle in Form einer Zapf- oder Gelenkwelle 28 an ein Pumpengetriebe PG mit einer Pumpe 29 als Verdränger gekoppelt wird. Diese Pumpe 29 wirkt über einen Ventilblock VB an dem insbesondere rotatorischen Verbraucher 36. Über einen Kühler 5' und einen Rücklauffilter 4' ist dieser Hydraulikkreislauf üblicherweise an einen zusätzlichen Ölbehälter 3' anzuschließen.

Damit wird deutlich, dass diese vorbeschriebenen und an sich bekannten Steueranordnungen für Arbeitsorgane landwirtschaftlicher Maschinen M als Anhängeaggregate von Zugfahrzeugen Z durch zwei unabhängig voneinander betreibbare Pumpensysteme gemäß 2 und 29 antreibbar sind.

Das in Fig. 2 als Prinzipbild veranschaulichte Basiskonzept der erfindungsgemäßen Hydrauliksteuerung ist darauf gerichtet, dass diese Steuerungsbaugruppe - ausgehend von den am Zugfahrzeug Z im Bereich der Schnittstellen bei H und 28 herstellbaren Verbindungen - nunmehr als eine ein neuartig gekoppeltes Hydrauliksystem definierende Versorgungseinheit E ausgebildet wird.

Diese Versorgungseinheit E ist so ausgeführt, dass jeweilige Differenzmengen und/oder -drücke von im Zugfahrzeug-Maschinen-System förderbaren und bisher in getrennten Pumpensystemen wirkenden Arbeitsvolumenströmen nunmehr mittels dieser Versorgungseinheit E intern erfasst, verglichen und gezielt umverteilt werden können. Damit wird innerhalb der Versorgungseinheit E eine integrierte Leistungsanpassung aktiviert, derart, dass zwischen den beiden an sich bekannten Pumpensystemen zumindest ein regelbarer Ausgleichsförderstrom zu zumindest einem der Arbeitsorgane hin erzeugt wird. Bereits ein Vergleich von Fig. 1 und Fig. 2 macht deutlich, dass zumindest dabei die Baugruppen 3', 4' und 5' entbehrlich sind und auch zumindest die gleiche Anzahl von Verbrauchern 17, 18, 36 einsetzbar bleibt.

In der schematischen Übersicht gemäß Fig. 2 wird die vorteilhafte Ausbildung dieser Versorgungseinheit E dadurch deutlich, dass ausgehend von der Zapfwelle 28 nur noch das eine Verdränger-Pumpensystem 29 über den Ventilblock VB mit dem ein Arbeitsorgan definierenden Verbraucher 36 zusammenwirkt. Dieses nunmehr ohne die bisher üblichen Komponenten von Kühlsystem, Filter und Ölbehälter (Fig. 1) auskommende System in Fig. 2 definiert ein sekundäres Pumpensystem SP, das innerhalb der hier zweigliedrig ausgeführten Versorgungseinheit E mit einem primären Pumpensystem PP verbunden ist.

Dazu ist die in einer Anwendungsphase zumindest mit dem hydraulischen Abtrieb H des Zugfahrzeuges Z koppelbare Versorgungseinheit E zumindest im Bereich eines Austauschverbinders AV mit einer Versorgungsleitung 22 für das sekundäre Pumpensystem SP versehen, aus dem eine entsprechende Rücklaufleitung 21 in das primäre Pumpensystem PP zurückgeführt ist.

Mit diesem Austauschverbinder AV wird ein System aufgebaut, bei dem zwischen dem primären Pumpensystem PP und dem sekundären Pumpensystem SP eine hydraulisch variabel ausführbare Steuer- und Ausgleichsverbindung wirksam wird, die mit vergleichsweise (Fig. 1 zu Fig. 2) geringem Aufwand eine optimale Steuerung einer Vielzahl von Verbrauchern ermöglicht.

Bei der praktischen Anwendung der erfindungsgemäßen Steueranordnung mit einer Versorgungseinheit E wird im Bereich der hydraulischen Schnittstelle H die Verbindung mit der Hydraulikeinheit 1 des Zugfahrzeuges Z hergestellt. Danach kann ein beispielsweise aus dem Zugfahrzeug Z und einem gezogenen Kartoffelvollernter bestehendes Gespann durch die nunmehr als ein gekoppeltes Hydrauliksystem wirkenden Steuerelemente des primären und sekundären Pumpensystems PP, SP optimal an die jeweilige Arbeitssituation angepasst werden. Dabei wird der Ventilblock VB des Primärpumpensystems PP in an sich bekannter Ausführung mittels eines Schlepper-Wegeventils mit dem Zugfahrzeug Z verbunden, so dass Zylinderfunktionen oder motorische Funktionen im Bereich der Verbraucher 17, 18 des Primärpumpensystems PP bedient werden können. Ebenso ist denkbar, den Power Beyond-Anschluss des Zugfahrzeuges Z zu nutzen.

Bei der Erweiterung des Gespann-Systems mit der erfindungsgemäßen Versorgungseinheit E kann weiterhin die hydraulische Leistung der Hydraulikeinheit 1 des Zugfahrzeuges Z genutzt werden, wobei hier bei den meisten Anwendungsfällen eine offene Kreislaufpumpe mit Druckförderstromregler im Primärpumpensystem PP vorgesehen ist. Ausgehend von diesem System wird nunmehr die mit der Zapfwelle 28 des Zugfahrzeuges 1 zusammenwirkende Verdrängerbaugruppe der Maschine M dadurch gesteuert, dass auch diese Bauteile zumindest phasenweise mit der zentralen Versorgungseinheit E verbunden werden. Dabei wird diese zusätzliche Leistung - die durch den Verbraucher 36 gefordert wird - über eine Ventilsteuerung den jeweiligen Verbrauchern von Anbaugeräten priorisiert zur Verfügung gestellt.

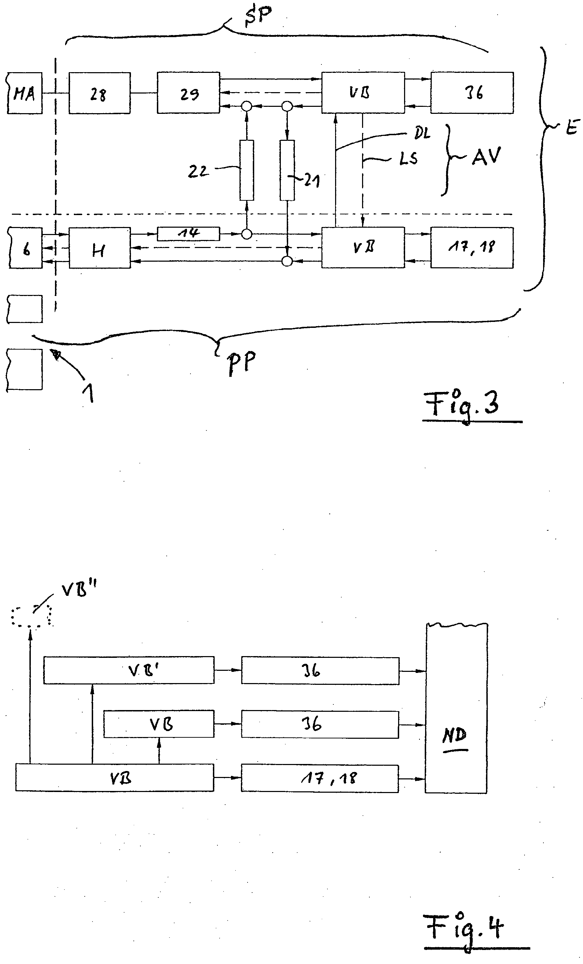

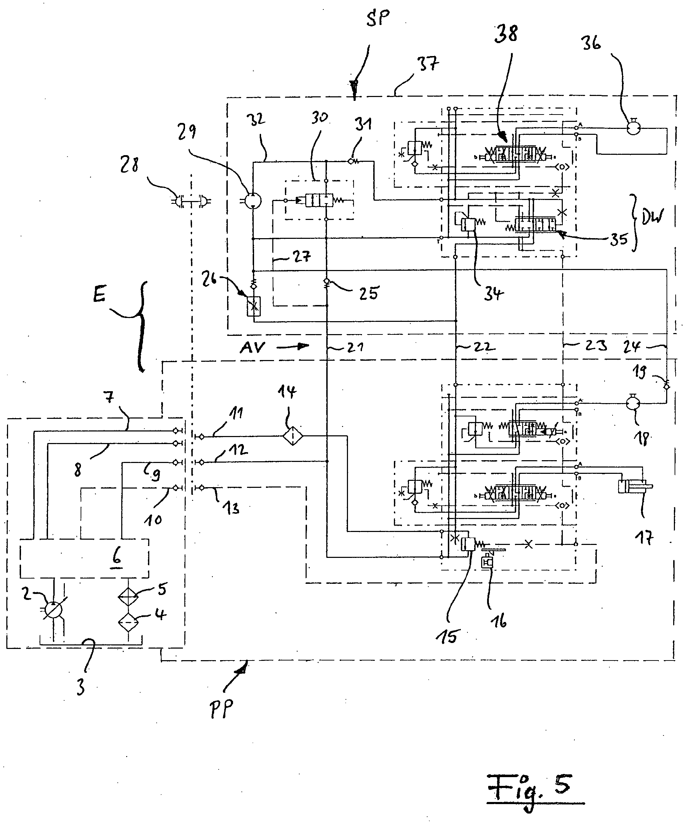

Dazu kann ein an sich bekanntes Lastdruck-Meldesystem in die Versorgungseinheit E integriert werden. Vorteilhaft wird dazu eine insbesondere als Zwei-Pumpen-Druckwaage 35 ausgebildete Druckwaage DW (Fig. 5) genutzt, mittels der der Verbraucherdruck des Sekundärpumpensystems SP an das Primärpumpensystem PP gemeldet werden kann. In Fig. 3 sind mit LS bzw. DL entsprechende, den Systemdruck nutzende Informationsleitungen zwischen den beiden Ventilblöcken VB dargestellt.

Dabei ist auch denkbar, dass der zumindest eine Lastdruckmelder des Systems durch ein elektrisches Steuersignal wirksam ist. Damit kann eine elektronische Regelung realisiert werden, bei der die Zwei-Pumpen-Druckwaage ersetzt wird.

Dazu wird ein im Niederdruckbereich ND (Fig. 4) des Sekundärpumpensystems SP entstehender Volumenstrom aus der Summe rückfließender Volumenströme, insbesondere der rotatorischen Verbraucher von Primär- und Sekundärpumpensystem PP, SP, gebildet. In dieser Steuerphase kann eine zusätzliche Einspeisung durch das Primärpumpensystem PP vorgesehen sein.

Gleichzeitig ist die Steuerung so ausgelegt, dass eine gezielte Querspülung im Niederdruckbereich ND erfolgt. Damit werden variabel ausführbare Möglichkeiten des Ölaustauschs erreicht, so dass ein im Bereich der Steuerungskomponenten bzw. der Versorgungseinheit E entstehender Wärmeüberschuss vorteilhaft zum gemeinsamen Tank in Form des Ölbehälters 3 am Zugfahrzeug Z abgeführt werden kann. Bei einer denkbaren versehentlichen Entkopplung dieser einzigen Tankverbindung während einer Arbeitsphase könnte ein maximaler Systemdruck im Primär- und Sekundärpumpensystem PP, SP entstehen. Um einen weiteren, insbesondere zu Beschädigungen des Systems führenden Druckanstieg zu vermeiden, wird ein Kurzschluss im Sekundärpumpensystem SP durch ein entsprechendes 2/2-Wege-Ventil 30 geschaltet (Fig. 5).

Die Steueranordnung ist so ausgeführt (Fig. 5), dass eine genaue Einstellung von im System der Versorgungseinheit E wirkenden Volumenströmen durch eine entsprechende Regelung mittels des bereits angesprochenen Lastdruckmelders LS, DL möglich ist. Dazu wird insbesondere die speziell an die Versorgungseinheit E angepasste Druckwaage im Bereich der Zwei-Pumpen-Druckwaage 35 (Fig. 5) genutzt. Bei dem beispielhaften Fall einer "Überversorgung" des in Fig. 5 dargestellten Systems kann sich damit folgender denkbarer Steuerungsablauf ergeben:
Durch die Drehzahl der Zapfwelle 28 und ein konstantes Verdrängungsvolumen der Sekundärpumpe 29 stellt sich ein entsprechender Volumenstrom ein. Das Wegeventil 38 ist zunächst geschlossen. Damit stellt sich in der Druckleitung 32 der Sekundärpumpe 29 der Druck der Regelfeder ein, wobei dieser Druck auch auf der Stirnfläche eines Kolbens der Zwei-Pumpen-Druckwaage 35 wirksam ist. In dieser Schaltsituation wird der gesamte Volumenstrom in den Bereich des Niederdrucks ND des Sekundärpumpensystems SP zurückgeführt.

Für den Fall, dass das Wegeventil 38 geöffnet wird, stellt sich über die Messblende des Steuerschiebers ein Druckverlust ein. Dieser kann über die Wechselventilkette in der Federkammer der Zwei-Pumpen-Druckwaage 35 gemeldet werden. Bei mehreren Verbrauchern 36 im System entspricht dieser Melde-Druck dem höchsten Verbraucherdruck.

Für den Fall, dass der zugeführte Volumenstrom größer ist als der über die Ausleitung des Wegeventils 38 geforderte Volumenstrom, summieren sich der Druck des Verbrauchers und der Druck der Regelfeder in der Druckleitung 32. Der dabei verbleibende Reststrom wird in den Niederdruck des Sekundärpumpensystems SP zurückgeführt.

Bei dieser Anwendung des Systems im Bereich der "Überversorgung" kann beispielsweise davon ausgegangen werden, dass im Bereich der Zapfwelle 28 eine Drehzahl von 750 Umdrehungen pro Minute (U/min) eingestellt wird. Das Verdrängervolumen bei 29 soll dabei 100 cm³ betragen, und das Arbeitsorgan 36 weist ein Volumen von 100 cm³ auf. Bei diesem eingestellten Verdrängervolumen könnte dann eine Drehzahl von 500 U/min eingestellt sein. Damit wird ein Volumenstrom erzeugt, der mehr als ausreichend ist, um die eingestellte bzw. geforderte Drehzahl zu erreichen. Vielmehr kann festgestellt werden, dass eine überschüssige Menge von 25 l/min entsteht. Diese wird über die hier als Druckwaage DW vorgesehene Zwei-Pumpen-Druckwaage 35 in einem geschlossenen Kreis geführt.

Dabei dient das Einspeiseventil 26 zur Querspülung, so dass dauerhaft in dieses System eine definierte "frische" Menge Hydrauliköl eingespeist wird. Die Ausspeisung 21 des Hydrauliköls erfolgt durch ein Rückschlagventil 25. In diesem Fall werden keine Leistungsreserven aus dem Primärpumpensystem PP benötigt. Vielmehr hält die Zwei-Pumpen-Druckwaage 35 die Versorgung aus dem primären Pumpensystem PP geschlossen, und es wird die Überschussmenge zum T-Kanal des sekundären Pumpensystems SP hin abgeregelt.

In einem zweiten Anwendungsfall ist denkbar, dass das System in einer "Unterversorgung" gesteuert wird:
Dabei wird der Steuerschieber des Wegeventils 38 so weit ausgelenkt, dass die Menge im Reststrom gegen Null geht und damit die Regeldruckdifferenz an der Zwei-Pumpen-Druckwaage 35 hin zusammenbricht. Der Kolben der Zwei-Pumpen-Druckwaage 35 wird somit durch die Federkraft in Richtung Neutralstellung zurückgelenkt. Durch diese Bewegung des Kolbens wird gleichzeitig eine Steuerkante geöffnet und damit die Lastmeldung des Sekundärpumpensystems SP in die Wechselventilkette des Primärpumpensystems PP weitergegeben.

Daraus resultiert, dass das Druckniveau des Primärpumpensystems PP entsprechend der eingestellten Regeldruckdifferenz an der Primärpumpe 2 angehoben wird. Gleichzeitig stellt sich über die Steuerkante der Zwei-Pumpen-Druckwaage 35 ein Volumenstrom vom Primärpumpensystem PP zum Sekundärpumpensystem SP hin ein, wobei dieser Volumenstrom der fehlenden Differenzmenge im Hochdruck des Sekundärpumpensystems SP entspricht.

Für den Fall, dass eine Arbeitsfunktion im Primärpumpensystem PP betätigt wird, die insbesondere im Druckniveau höher liegt als die Lastmeldung des Sekundärpumpensystems SP, stellt sich ein um die Regeldruckdifferenz höheres Druckniveau im Primärpumpensystem PP ein. Dabei wird lediglich die in das Sekundärpumpensystem SP vom Primärpumpensystem PP geförderte Menge auf das Niveau des Sekundärpumpensystems SP gedrosselt.

Bei dem denkbaren Anwendungsfall dieser beispielhaften "Unterversorgung" ist an der Zapfwelle 28 beispielsweise eine Drehzahl von 750 U/min vorhanden. Das Verdrängervolumen im sekundären Pumpensystem SP könnte 100 cm³ betragen, und das ein Volumen von 100 cm³ aufweisende Arbeitsorgan 36 im sekundären Pumpensystem SP erfordert dabei einen Abtrieb von 1000 U/min. Das sekundäre Pumpensystem SP arbeitet dabei in "Unterversorgung", da der durch den Verdränger 29 im sekundären Pumpensystem SP erzeugte Volumenstrom nicht ausreicht, um die geforderte Drehzahl von 1000 U/min zu erreichen. Dies resultiert daraus, dass die geförderte Menge durch den Verdränger 75 l/min beträgt, der Bedarf des Arbeitsorgans 36 im sekundären Pumpensystem SP jedoch gleichzeitig 100 l/min erfordert.

Bei dieser "Unterversorgungs"-Situation können nunmehr mittels des gekoppelten Hydrauliksystems die Leistungsreserven aus dem primären Pumpensystem PP genutzt werden. Dazu öffnet die Zwei-Pumpen-Druckwaage 35 die Druckleitung 22 aus dem primären Pumpensystem PP und lässt die fehlende Menge des Volumenstromes in das sekundäre Pumpensystem SP einfließen. Durch einen entsprechend konstruktiven Aufbau der Druckwaage 35 wird vor dem Öffnen der Druckleitung die Lastdruckmeldung LS auf das primäre Pumpensystem PP übertragen (Leitung 23). Diese Lastdruckmeldung LS bewirkt das Anheben des Druckniveaus im primären Pumpensystem PP. Die eingestellte Regeldruckdifferenz im primären Pumpensystem ist dabei über der Regeldruckdifferenz im sekundären Pumpensystem SP eingestellt. Die fehlende Menge von 25 l/min kann also in das sekundäre Pumpensystem SP eingefördert werden.

Die vorbeschriebene Struktur einer hydraulischen Steueranordnung mit den in einer Versorgungseinheit E integrierten Pumpensystemen PP, SP ist so aufgebaut, dass im Bereich des Austauschverbinders AV auch mehrere sekundäre Pumpensysteme SP anschließbar sind. In Fig. 4 ist in einer Prinzipdarstellung diese Erweiterungsmöglichkeit veranschaulicht. Dabei ist der Ventilblock VB des Primärpumpensystems PP zusätzlich zu dem Block VB mit weiteren Ventilblöcken VB', VB" jeweiliger sekundärer Pumpensysteme verbunden. Die entsprechenden rotatorischen Verbraucher 36 sind über die Niederdruck-Verbindung ND in das System integriert. Damit wird deutlich, dass im Bereich eines Zugfahrzeug-Maschinen-Gespanns, Z, M weitgehende Erweiterungen der Nutzungsbedingungen möglich sind und das gekoppelte Hydrauliksystem ausgehend von der Basiseinheit E grundsätzlich auch als ein Baukastensystem aufgebaut werden kann.

Für die Funktion des erfindungsgemäßen Konzeptes der Versorgungseinheit E sind die in Fig. 5 ersichtlichen Bauteile als Basis-Ausführung dargestellt. Dabei wird vorteilhaft erreicht, dass mittels des 2/2-Wege-Ventils 30 eine Absicherung des sekundären Pumpensystems SP auf Überdruck bewirkt ist. Durch die Versorgungsleitung 24 und das Rückschlagventil 19 kann während des Betriebes des Arbeitsorgans 18 ein weiterer Ölaustausch mit dem sekundären Pumpensystem SP erreicht werden.

Zur effektiven Anwendung des dargestellten Hydrauliksystems (z. B. gemäß Fig. 5) sind auch weitere zusätzliche Baueinheiten in die Struktur zu integrieren. Beispielsweise kann vorgesehen werden, dass die Lastdruckmeldung LS auf eine zusätzliche Eingangs-Druckwaage 15 im primären Pumpensystem PP erfolgt. Wahlweise kann diese Lastdruckmeldung LS auch mit einer im Bereich der Schlepperpumpe 2 vorgesehenen Druckwaage zusammenarbeiten.

In der Darstellung gemäß Fig. 5 sind weitere Einzelteile der hydraulischen Steuerung angegeben, die hier ohne nähere Erklärungen zu bezeichnen sind, da sich die jeweiligen Funktionen aus der Logik des Hydraulikplanes ergben. Mit 7 ist im Bereich eines Steuergerätes für Konstantstrom die Hydraulikmuffe bezeichnet, und auch 8, 9 und 10 beziehen sich auf Hydraulikmuffen gemäß den Standard-Anschlüssen für P, T und LS. Zugeordnet sind die entsprechenden Steckmuffen 11, 12 und 13 für P, T und LS. Im primären Pumpensystem PP ist außerdem ein Druckfilter 14 vorgesehen. Der Bereich der Druckwaage 15 kann mit einer Einstellschraube 16 versehen sein. In der Rücklaufleitung 21 ist als Druckhalteventil für den Niederdruck ND ein Rückschlagventil 25 eingebracht, und mit 26 ist ein Einspeiseventil in den Niederdruck des sekundären Pumpensystems SP (37) bezeichnet. Die Leitung 27 umfasst eine Referenzdruckleitung für den Tankdruck, und der Verdränger 29 kann vorzugsweise als zumindest ein Gerotormotor ausgeführt werden. Im Bereich der Druckleitung 32 des sekundären Primärpumpensystems SP ist ein Rückschlagventil 31 vorgesehen, und mit 34 ist ein Druckbegrenzungsventil im System 37 veranschaulicht.

Damit wird deutlich, dass die Anwendung dieser Hydraulikeinheiten mit der Versorgungseinheit E weitgehend variabel erweiterbar und an jeweilige Anwendungen anpassbar ist. Denkbar ist dabei, dass sämtliche mit primären Pumpensystemen, Konstantstrom-Systemen und/oder Konstantdruck-Systemen bzw. LS-Systemen versehene Gespann-Strukturen Z, M mit der dargestellten und beschriebenen Steueranordnung kombinierbar sind.

## Patentansprüche

1. Hydraulische Steueranordnung an Arbeitsorganen einer landwirtschaftlichen Maschine (M), die mit einem als Schlepper vorgesehenen Zugfahrzeug (Z) zusammenwirkt, dessen hydraulischer kuppelbarer Abtrieb (H) ein erstes Pumpensystem (PP) mit Arbeitsorganen (17, 18) aufweist und dabei eine ein Antriebsmoment vom Zugfahrzeug (Z) übertragende Zapfwelle (28) zur Betätigung eines zweiten Pumpensystems (SP) mit Arbeitsorganen (36) nutzbar ist, **dadurch gekennzeichnet, dass** die Steuerung als eine jeweilige Differenzmengen und/oder -drücke eines Arbeitsvolumenstromes zwischen den beiden Pumpensystemen (PP, SP) erfassende, vergleichende und umverteilende Versorgungseinheit (E) ausgebildet ist, diese mit einer integrierten sowie zwischen den beiden Pumpensystemen (PP, SP) einen regelbaren Ausgleichsförderstrom zu den Arbeitsorganen (17, 18, 36) hin erzeugenden Leistungsanpassung versehen ist, wobei die mit dem hydraulischen Abtrieb (H) des Zugfahrzeuges (Z) gekoppelte Versorgungseinheit (E) zumindest einen Austauschverbinder (AV) aufweist, derart, dass zwischen einem primären Pumpensystem (PP) und einem sekundären Pumpensystem (SP) eine Steuer- und Ausgleichsverbindung wirksam ist, und wobei jeweilige an sich bekannte hydraulische Antriebs- und Rückführleitungen (H) vom Zugfahrzeug (Z) zur Versorgungseinheit (E) gerichtet sind, diese in ihren jeweiligen ausgangsseitigen Bereichen mit den jeweiligen Arbeitsorganen (17, 18, 36) verbindbar ist und der dabei abgezweigte Austauschverbinder (AV) einen Teilbereich einer hydraulischen Rückkopplung bildet, derart, dass damit im Bereich der Versorgungseinheit (E) das mit dem Hydraulikkreislauf (1) des Zugfahrzeuges (Z) zusammenwirkende primäre Pumpensystem (PP) und das mit der Zapfwelle (28) des Zugfahrzeuges (Z) zusammenwirkende sekundäre Pumpensystem (SP) jeweils einen offenen bzw. einen geschlossenen Kreislauf definieren.

2. Hydraulische Steueranordnung nach Anspruch 1, **dadurch gekennzeichnet, dass** das primäre und das sekundäre Pumpensystem (PP, SP) zumindest phasenweise gemeinsam zur Aktivierung von ansteuerbaren Arbeitsorganen (17, 18, 36) in beiden Kreisläufen einsetzbar sind.

3. Hydraulische Steueranordnung nach Anspruch 1 oder 2, **dadurch gekennzeichnet, dass** die beiden über die Versorgungseinheit (E) kommunizierenden Pumpensysteme (PP, SP) mit zumindest einem Lastdruckmelder (DW) zusammenwirken.

4. Hydraulische Steueranordnung nach Anspruch 3, **dadurch gekennzeichnet, dass** der Lastdruckmelder (DW) durch ein elektrisches Steuersignal wirksam ist.

5. Hydraulische Steueranordnung nach einem der Ansprüche 1 bis 4, **dadurch gekennzeichnet, dass** mittels des Lastdruckmelders (DW) jeweilige Leistungsreserven an den jeweils aktivierten Arbeitsorganen (17, 18, 36) durch Umverteilung eines Volumenstromes vom primären zum sekundären Pumpensystem (20, 37) nutzbar sind.

6. Hydraulische Steueranordnung nach einem der Ansprüche 1 bis 5, **dadurch gekennzeichnet, dass** für das im primären und sekundären Pumpensystem (PP, SP) wirkende Hydrauliköl eine gemeinsame Rückführung (21) vorgesehen ist.

7. Hydraulische Steueranordnung nach Anspruch 6, **dadurch gekennzeichnet, dass** für das primäre und das sekundäre Pumpensystem (PP, SP) nur ein gemeinsamer Tank (3) im Bereich des Zugfahrzeuges (Z) vorgesehen ist.

8. Hydraulische Steueranordnung nach einem der Ansprüche 1 bis 7, **dadurch gekennzeichnet, dass** im Bereich des sekundären Pumpensystems (SP) eine einen Ölaustausch bewirkende Querspülung zur Fluidkühlung und/oder Filterung nutzbar ist.

9. Hydraulische Steueranordnung nach einem der Ansprüche 1 bis 8, **dadurch gekennzeichnet, dass** zumindest im Bereich des sekundären Pumpensystems (SP) ein bei Entkopplung der Verbindung zum gemeinsamen Tank (3) wirksamer Kurzschlusskreislauf (30) vorgesehen ist.

10. Hydraulische Steueranordnung nach einem der Ansprüche 1 bis 9, **dadurch gekennzeichnet, dass** der Lastdruck (LS) des sekundären Pumpensystems (SP) über zumindest eine Druckwaage (DW) auf das primäre Pumpensystem (PP) leitbar ist und damit die Einspeisung eines Teilvolumenstromes in das sekundäre Pumpensystem (SP) regelbar ist.

11. Hydraulische Steueranordnung nach Anspruch 10, **dadurch gekennzeichnet, dass** die Versorgungseinheit (E) mit einer Zwei-Pumpen-Druckwaage (35) als Lastdruckmelder versehen ist.

12. Hydraulische Steueranordnung nach einem der Ansprüche 1 bis 11, **dadurch gekennzeichnet, dass** das sekundäre Pumpensystem (SP) im Bereich der Versorgungseinheit (E) eine integrierte Prioritätsfunktion aufweist, derart, dass der Volumenstrom im sekundären Pumpensystem (SP) in Abhängigkeit von den hydraulischen Verbrauchern (36) mittels der sekundären Pumpe nachgefördert wird.

13. Hydraulische Steueranordnung nach einem der Ansprüche 1 bis 12, **dadurch gekennzeichnet, dass** das primäre und das sekundäre Pumpensystem (PP, SP) mit unterschiedlichen Druckbereichen aktivierbar sind.

14. Hydraulische Steueranordnung nach einem der Ansprüche 1 bis 13, **dadurch gekennzeichnet, dass** diese im Bereich des Austauschverbinders (AV) mit mehreren sekundären Pumpensystemen (SP) verbindbar ist.

15. Hydraulische Steueranordnung nach Anspruch 14, **dadurch gekennzeichnet, dass** jedes der angeschlossenen sekundären Pumpensysteme (SP) mit einer separaten Pumpe (29) versehen ist.

## Claims

1. Hydraulic control arrangement for working members of an agricultural machine (M) which interacts with a towing vehicle (Z) provided as a tractor, the hydraulic couplable output (H) of which comprises a first pump system (PP) having working members (17, 18) and in the process a power take-off shaft (28) which transmits a drive torque from the towing vehicle (Z) can be used to operate a second pump system (SP) comprising working members (36), **characterised in that**
the controller is designed as a supply unit (E) which detects, compares and redistributes respective differential quantities and/or pressures of a working volume flow between the two pump systems (PP, SP), said unit is provided with integrated power adjustment which generates a variable balancing flow rate to the working members (17, 18, 36) between the two pump systems (PP, SP), the supply unit (E) coupled to the hydraulic output (H) of the towing vehicle (Z) comprising at least one exchange connector (AV) such that a control and balancing connection is active between a primary pump system (PP) and a secondary pump system (SP),
and respective hydraulic drive and return lines (H) known per se being directed from the towing vehicle (Z) to the supply unit (E), it being possible for said unit to be connected to the respective working members (17, 18, 36) in its respective exit-side regions, and the exchange connector (AV) branched in the process forming a portion of a hydraulic return coupling such that the primary pump system (PP) which interacts with the hydraulic circuit (1) of the towing vehicle (Z) and the secondary pump system (SP) which interacts with the power take-off shaft (28) of the towing vehicle (Z) thus each define an open and a closed circuit in the region of the supply unit (E).

2. Hydraulic control arrangement according to claim 1, **characterised in that** the primary and the secondary pump system (PP, SP) can both be used, at least at times, to activate actuable working members (17, 18, 36) in both circuits.

3. Hydraulic control arrangement according to either claim 1 or claim 2, **characterised in that** the two pump systems (PP, SP) which communicate by means of the supply unit (E) interact with at least one load pressure detector (DW).

4. Hydraulic control arrangement according to claim 3, **characterised in that** the load pressure detector (DW) operates by means of an electrical control signal.

5. Hydraulic control arrangement according to any of claims 3 to 4, **characterised in that**, by means of the load pressure detector (DW), power reserves can be used at the working members (17, 18, 36) activated in each case by redistributing a volume flow from the primary to the secondary pump system (20, 37).

6. Hydraulic control arrangement according to any of claims 1 to 5, **characterised in that** a common return line (21) is provided for the hydraulic oil operating in the primary and the secondary pump system (PP, SP).

7. Hydraulic control arrangement according to claim 6, **characterised in that** only one common tank (3) is provided in the region of the towing vehicle (Z) for the primary pump system and the secondary pump system (PP, SP).

8. Hydraulic control arrangement according to any of claims 1 to 7, **characterised in that** cross rinsing causing an oil exchange can be used in the region of the secondary pump system (SP) for cooling fluid and/or filtering.

9. Hydraulic control arrangement according to any of claims 1 to 8, **characterised in that** a short circuit (30) which is active when the connection to the common tank (3) is broken is provided at least in the region of the secondary pump system (SP).

10. Hydraulic control arrangement according to any of claims 1 to 9, **characterised in that** the load pressure (LS) of the secondary pump system (SP) can be guided to the primary pump system (PP) via at least one pressure compensator (DW) and therefore the feed of a partial volume flow into the secondary pump system (SP) can be regulated.

11. Hydraulic control arrangement according to claim 10, **characterised in that** the supply unit (E) is provided with a dual-pump pressure compensator (35) in the form of a load pressure detector.

12. Hydraulic control arrangement according to any of claims 1 to 11, **characterised in that** the secondary pump system (SP) comprises an integrated priority function in the region of the supply unit (E) such that the volume flow in the secondary pump system (SP) is re-delivered by means of the secondary pump depending on the hydraulic consumers (36).

13. Hydraulic control arrangement according to any of claims 1 to 12, **characterised in that** the primary and the secondary pump system (PP, SP) can be activated in different pressure ranges.

14. Hydraulic control arrangement according to any of claims 1 to 13, **characterised in that** said arrangement can be connected to a plurality of secondary pump systems (SP) in the region of the exchange connector (AV).

15. Hydraulic control arrangement according to claim 14, **characterised in that** each of the connected secondary pump systems (SP) is provided with a separate pump (29).

## Revendications

1. Dispositif de commande hydraulique sur des organes de travail d'une machine agricole (M), laquelle coopère avec un véhicule tracteur (Z) dont la sortie (H) à couplage hydraulique comporte un premier système de pompe (PP) avec des organes de travail (17, 18), une prise de force (28) qui transmet un couple moteur issu du véhicule tracteur (Z) pouvant alors être utilisée pour actionner un deuxième système de pompe (SP) avec des organes de travail (36),
**caractérisé en ce que** la commande est conçue comme une unité d'alimentation (E) détectant, comparant et redistribuant des quantités et/ou pressions différentielles respectives d'un débit volumique de travail entre les deux systèmes de pompe (PP, SP), celle-ci étant munie d'une adaptation de puissance intégrée qui produit entre les deux systèmes de pompe (PP, SP) un débit de sortie d'équilibrage réglable en direction des organes de travail (17, 18, 36), l'unité d'alimentation (E) couplée à la sortie hydraulique (H) du véhicule tracteur (Z) comportant au moins un connecteur d'échange (AV) de telle sorte qu'une liaison de commande et d'équilibrage est active entre un système de pompe (PP) primaire et un système de pompe (SP) secondaire et des conduites d'entraînement et de retour hydrauliques (H) connues respectives étant dirigées du véhicule tracteur (Z) à l'unité d'alimentation (E), celle-ci pouvant être reliée dans ses zones côté sortie respectives aux organes de travail respectifs (17, 18, 36) et le connecteur d'échange (AV) ainsi dérivé formant une zone partielle d'un retour hydraulique de telle sorte que, ainsi, dans la zone de l'unité d'alimentation (E), le système de pompe (PP) primaire coopérant avec le circuit hydraulique (1) du véhicule tracteur (Z) et le système de pompe (SP) secondaire coopérant avec la prise de force (28) du véhicule tracteur (Z) définissent chacun un circuit ouvert respectivement un circuit fermé.

2. Dispositif de commande hydraulique selon la revendication (1), **caractérisé en ce que** les systèmes de pompe primaire et secondaire (PP, SP) peuvent être utilisés au moins par phases en commun pour activer des organes de travail pouvant être commandés (17, 18, 36) dans les deux circuits.

3. Dispositif de commande hydraulique selon la revendication 1 ou 2, **caractérisé en ce que** les deux systèmes de pompe (PP, SP) communiquant par l'intermédiaire de l'unité d'alimentation (E) coopèrent avec au moins un détecteur de pression de charge (DW).

4. Dispositif de commande hydraulique selon la revendication 3, **caractérisé en ce que** le détecteur de pression de charge (DW) est actif via un signal de commande électrique.

5. Dispositif de commande hydraulique selon l'une des revendications 3 à 4, **caractérisé en ce que**, au moyen du détecteur de pression de charge (DW), des réserves de puissance respectives peuvent être utilisées sur les organes de travail respectivement activés (17, 18, 36) par redistribution d'un débit volumique du système de pompe primaire au système de pompe secondaire (20, 37).

6. Dispositif de commande hydraulique selon l'une des revendications 1 à 5, **caractérisé en ce que**, pour l'huile hydraulique agissant dans les systèmes de pompe primaire et secondaire (PP, SP), il est prévu un retour commun (21).

7. Dispositif de commande hydraulique selon la revendication 6, **caractérisé en ce que**, pour les systèmes de pompe primaire et secondaire (PP, SP), il est prévu un seul réservoir commun (3) dans la zone du véhicule tracteur (Z).

8. Dispositif de commande hydraulique selon l'une des revendications 1 à 7, **caractérisé en ce que**, dans la zone du système de pompe secondaire (SP), un rinçage transversal provoquant un échange d'huile est utilisable pour le refroidissement de fluide et/ou le filtrage.

9. Dispositif de commande hydraulique selon l'une des revendications 1 à 8, **caractérisé en ce qu'**il est prévu, au moins dans la zone du système de pompe secondaire (SP), un court-circuit (30) actif lors du découplage de la liaison vers le réservoir commun (3).

10. Dispositif de commande hydraulique selon l'une des revendications 1 à 9, **caractérisé en ce que** la pression de charge (LS) du système de pompe secondaire (SP) peut être conduite au système de pompe primaire (PP) par l'intermédiaire d'au moins une balance de pression (DW) et l'introduction d'un débit volumique partiel dans le système de pompe secondaire (SP) peut donc être régulée.

11. Dispositif de commande hydraulique selon la revendication 10, **caractérisé en ce que** l'unité d'alimentation (E) est munie d'une balance de pression à deux pompes (35) comme détecteur de pression de charge.

12. Dispositif de commande hydraulique selon l'une des revendications 1 à 11, **caractérisé en ce que** le système de pompe secondaire (SP) comporte dans la zone de l'unité d'alimentation (E) une fonction de priorité intégrée de telle sorte que le débit volumique dans le système de pompe secondaire (SP) est ensuite transporté au moyen de la pompe secondaire en fonction des consommateurs hydrauliques (36).

13. Dispositif de commande hydraulique selon l'une des revendications 1 à 12, **caractérisé en ce que** les systèmes de pompe primaire et secondaire (PP, SP) peuvent être activés avec des plages de pression différentes.

14. Dispositif de commande hydraulique selon l'une des revendications 1 à 13, **caractérisé en ce qu'**il peut être relié à plusieurs systèmes de pompe secondaires (SP) dans la zone du connecteur d'échange (AV).

15. Dispositif de commande hydraulique selon la revendication 14, **caractérisé en ce que** chacun des systèmes de pompe secondaires (SP) raccordés est muni d'une pompe séparée (29).
